(19) Europäisches Patentamt
European Patent Office
Office européen des brevets

(11) **EP 2 231 526 B1**

(12) # EUROPÄISCHE PATENTSCHRIFT

(45) Veröffentlichungstag und Bekanntmachung des Hinweises auf die Patenterteilung:
**04.11.2015 Patentblatt 2015/45**

(21) Anmeldenummer: **08855967.9**

(22) Anmeldetag: **04.12.2008**

(51) Int Cl.:
*C02F 1/42* (2006.01)   *B01J 49/00* (2006.01)
*G05D 21/02* (2006.01)

(86) Internationale Anmeldenummer:
**PCT/DE2008/002011**

(87) Internationale Veröffentlichungsnummer:
**WO 2009/071066 (11.06.2009 Gazette 2009/24)**

(54) **VERFAHREN ZUM BETRIEB EINER WASSERENTHÄRTUNGSANLAGE MIT ZWEI KALIBRIERKENNLINIEN UND ZUGEHÖRIGE WASSERENTHÄRTUNGSANLAGE**

METHOD FOR OPERATING A WATER SOFTENING SYSTEM HAVING TWO CALIBRATION CHARACTERISTICS AND ASSOCIATED WATER SOFTENING SYSTEM

PROCÉDÉ DE FONCTIONNEMENT D'UNE INSTALLATION D'ADOUCISSEMENT D'EAU AVEC DEUX COURBES D'ÉTALONNAGE ET INSTALLATION D'ADOUCISSEMENT D'EAU CORRESPONDANTE

(84) Benannte Vertragsstaaten:
**AT BE BG CH CY CZ DK EE ES FI FR GB GR HR HU IE IS IT LI LT LU LV MC MT NL NO PL PT RO SE SI SK TR**

(30) Priorität: **06.12.2007 DE 102007059058**

(43) Veröffentlichungstag der Anmeldung:
**29.09.2010 Patentblatt 2010/39**

(73) Patentinhaber: **Judo Wasseraufbereitung GmbH**
**71364 Winnenden (DE)**

(72) Erfinder:
• **SÖCKNICK, Ralf**
**70806 Kornwestheim (DE)**
• **NEIDHARDT, Klaus**
**71577 Grosserlach (DE)**
• **HAUG, Alexander**
**71686 Remseck (DE)**
• **MELCHER, Siegfried**
**71720 Oberstenfeld (DE)**

(74) Vertreter: **Kohler Schmid Möbus Patentanwälte Partnerschaftsgesellschaft mbB**
**Ruppmannstraße 27**
**70565 Stuttgart (DE)**

(56) Entgegenhaltungen:
**EP-A2- 0 900 765**   **DE-A1- 19 749 636**
**DE-A1- 19 940 162**   **US-A1- 2004 104 175**

**Beschreibung**

Hintergrund der Erfindung

Die Erfindung betrifft ein Verfahren zum Betrieb einer Wasserenthärtungsanlage mit einer Ionenaustauschervorrichtung umfassend ein Ionenaustauscherharz, einem Vorratsgefäß für die Bereitstellung einer Regeneriermittellösung zum Regenerieren des Ionenaustauscherharzes, einer Verschneidevorrichtung, sowie mindestens einem Durchflussmesser, wobei ein der Wasserenthärtungsanlage zufließender Volumenstrom $V(t)_{roh}$ von Rohwasser vor oder in der Wasserenthärtungsanlage auf einen ersten Teilstrom und einen zweiten Teilstrom aufgeteilt wird, und der erste Teilstrom über das Ionenaustauscherharz geleitet wird und dieser enthärtete Teilstrom $V(t)_{teil1weich}$ dem zweiten, rohwasserführenden Teilstrom $V(t)_{teil2roh}$ zugemischt wird,
wodurch in oder hinter der Wasserenthärtungsanlage ein abfließender Volumenstrom $V(t)_{verschnitt}$ von Verschnittwasser gebildet wird, wobei über die Verschneidevorrichtung das Verhältnis von erstem und zweitem Teilstrom im abfließenden Volumenstrom $V(t)_{verschnitt}$ von Verschnittwasser einstellbar ist,
wobei das Verfahren folgende Schritte aufweist:

- Bestimmung der Leitfähigkeit des Rohwassers mittels eines Leitfähigkeitssensors und daraus Bestimmung der Gesamthärte des Rohwassers mit einer in einer elektronischen Steuereinheit hinterlegten Kalibrierkennlinie,
- direkte oder indirekte Bestimmung des ersten Teilstroms $V(t)_{teil1weich}$ mit dem mindestens einen Durchflussmesser.

Ein solches Verfahren ist bekannt aus der DE 199 40 162 A1.

Wasserenthärtungsanlagen werden in verschiedenen Anwendungsbereichen eingesetzt, wenn enthärtetes oder teilenthärtetes Wasser aus technischen Gründen oder aus Komfortgründen benötigt wird. Bei der Enthärtung nach dem Ionenaustauschverfahren werden die im Wasser enthaltenen Härtebildner Calcium- und Magnesium-Ionen gegen Natrium-Ionen ausgetauscht. Dies geschieht mittels eines mit Natrium-Ionen beladenen Harzes (Ionenaustauscherharz). Bei Erschöpfung muss das Harz mit Salzsole regeneriert werden, um es dem Enthärtungsprozess erneut zur Verfügung stellen zu können.

Der Zeitpunkt, wann die Erschöpfung des Ionenaustauscherharzes erreicht wird und eine Regeneration durchgeführt werden muss, hängt von der Nennkapazität der Wasserenthärtungsanlage, von der Wasserqualität (d.h. der Rohwasserhärte) und vom Wasserverbrauch ab. Die wesentliche Problematik besteht darin, den richtigen Regenerierzeitpunkt unabhängig von der Wasserqualität automatisch und sicher zu bestimmen. Wird eine Regeneration zu früh eingeleitet, so steigt der Salzverbrauch und damit die Umweltbelastung, bei einem zu späten Regenerationsstart findet ein Härtedurchbruch statt.

Ein Verfahren zur Bestimmung des Regenerierzeitpunktes einer Wasserenthärtungseinrichtung ist beispielsweise aus DE 198 41 568 A1 bekannt. Hier wird der elektrische Leitwert vor und nach dem Enthärter gemessen und daraus eine Leitwertdifferenz ermittelt. Nachteilig bei diesem Verfahren ist jedoch, dass sich der Leitwert bei einem Calcium-Natrium-Austausch nur geringfügig ändert und dadurch bedingt der Regenerationszeitpunkt nur ungenau bestimmt werden kann. Eine Regeneration kann hier auch erst ausgelöst werden, wenn bereits eine unvollständige Enthärtung stattgefunden hat, also ein Härtedurchbruch bereits eingesetzt hat.

In der Druckschrift US 6 814 872 B2 wird eine Vorrichtung und ein Verfahren zur Steuerung der Regeneration eines Enthärters beschrieben. Hierzu werden die Wasserhärte und das Volumen des zu enthärtenden Wassers mittels eines Leitfähigkeitssensors bzw. einer ionenselektiven Elektrode und eines Wasserzählers bestimmt und die Signale einer elektronischen Steuerung zugeführt. Der Regenerationszeitpunkt wird durch Vergleich einer bisher dem Wasser entzogenen Gesamthärte mit einer Kapazität des Wasserenthärters bestimmt. Ionenselektive Elektroden sind jedoch sehr störanfällig und benötigen eine regelmäßige Wartung. Zudem sind solche Elektroden teuer.

Aus technischen oder wirtschaftlichen Gründen ist es oft notwendig oder erwünscht, lediglich teilenthärtetes Wasser einzusetzen. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität des Enthärters schnell erschöpft, und es muss frühzeitig regeneriert werden. Dies ist mit einem hohen Salzverbrauch und damit hohen Kosten verbunden. Zur Durchführung einer Teilenthärtung ist eine Vorrichtung (Verschneidevorrichtung) zum Mischen von enthärtetem Wasser (auch als Reinwasser oder Weichwasser bezeichnet) und Rohwasser notwendig. In der Regel ist es erwünscht, die Wasserhärte im Verschnittwasser, das ist das Gemisch von enthärtetem Wasser und Rohwasser, einzustellen und zu steuern.

Die EP 0 900 765 B1 beschreibt eine Vorrichtung zur Wasserenthärtung nach dem Ionenaustauschprinzip mit einer Verschneidevorrichtung. Eine Regenerationssteuerung für den Ionentauscher basiert auf der Überwachung des Beladungsgrad des Ionentauschers, ermittelt aus der Leitfähigkeit des Ionentauschers, wobei die Leitfähigkeit des Rohwassers oder alternativ die Leitfähigkeit des Reinwassers als Korrektur berücksichtigt wird. Eine Verschnittsteuerung wertet hingegen eine Rohwasserhärte aus. Die Ermittlung der Rohwasserhärte erfolgt über die Änderung des Beladungsgrads des Ionentauschers in Korrelation zur Durchflussmenge an Rohwasser. Es werden Durchflussmesser für das Rein- und Rohwasser sowie mehrere Leitwertsensoren im Ionenaustauschermaterial, deren Signale von einer elektronischen Auswerte- und Regeleinheit verarbeitet werden, eingesetzt. Diese bekannte Vorrichtung ist jedoch aufgrund der großen Anzahl von benötigten Elektroden recht aufwändig im Aufbau und damit teuer. Zudem ist die Einstellung der Härte des Verschnittwassers mit dieser Vorrichtung recht ungenau.

Die DE 197 49 636 A1 beschreibt eine rechnergesteuerte Geschirrspülmaschine mit einem Enthärter, bei der Spülwasser mit einem Härtegrad zwischen 1°dH und 3°dH durch Wasserverschnitt aus enthärtetem Weichwasser und nicht enthärtetem Rohwasser generiert wird. Um das Verschnittverhältnis korrekt einzustellen, wird die Rohwasserhärte ausgewertet, die mittels Härtegradsensoren in der Geschirrspülmaschine ermittelt werden kann. In Abhängigkeit von der verbrauchten Weichwassermenge wird ein Regenerierzeitpunkt für den Enthärter ermittelt.

Die DE 199 40 162 A1 beschreibt eine programmgesteuerte Geschirrspülmaschine mit einem Enthärter, bei der Spülwasser mit unterschiedlichen Härtegraden in Abhängigkeit von einem Spülmaschinen-Programm durch Wasserverschnitt aus enthärtetem Weichwasser und nicht enthärtetem Rohwasser generiert wird. Um das Verschnittverhältnis korrekt einzustellen, wird die Rohwasserhärte ausgewertet, die mittels Leitfähigkeitssensoren in der Geschirrspülmaschine ermittelt werden kann. In Abhängigkeit von der verbrauchten Weichwassermenge wird ein Regenerierzeitpunkt für den Enthärter ermittelt.

Aufgabe der Erfindung

Es ist die Aufgabe der vorliegenden Erfindung, ein Verfahren der eingangs genannten Art vorzustellen, mit dem sowohl der Zeitpunkt der Regeneration des Ionenaustauscherharzes als auch die Einstellung der Verschnittwasserhärte mit hoher Genauigkeit und kostengünstig möglich ist.

Kurze Beschreibung der Erfindung

Diese Aufgabe wird gelöst durch ein Verfahren der eingangs genannten Art, das dadurch gekennzeichnet ist, dass eine Gesamthärte I des Rohwassers, die zur automatischen Steuerung des Regeneriervorgangs des Ionenaustauscherharzes verwendet wird, mittels einer ersten Kalibrierkennlinie aus der gemessenen Leitfähigkeit abgeleitet wird, und eine Gesamthärte II des Rohwassers, die zur automatischen Steuerung der Verschneidevorrichtung verwendet wird, mittels einer zweiten Kalibrierkennlinie aus der gemessenen Leitfähigkeit abgeleitet wird, wobei die zweite Kalibrierkennlinie von der ersten Kalibrierkennlinie verschieden ist und die aus der ersten Kalibrierkennlinie abgeleitete Gesamthärte I zumindest abschnittsweise größer ist als die aus der zweiten Kalibrierkennlinie abgeleitete Gesamthärte II.

Zur korrekten Steuerung von Regeneration und Verschneidung muss die Wasserhärte des zufließenden Rohwassers ermittelt werden. Der elektrische Leitwert bzw. die Leitfähigkeit sind jedoch nur bedingt proportional zur Wasserhärte, d.h. zum Calcium- und Magnesiumgehalt des Wassers. Vielmehr ist der Leitwert ein Summenparameter, der alle im Wasser gelösten Ionen erfasst. Die bei einer bestimmten Leitfähigkeit tatsächlich vorliegende Wasserhärte kann um mehrere °dH schwanken. Ist die aus dem Leitwert bestimmte Wasserhärte größer als die tatsächliche Wasserhärte, so wird die Regeneration zu früh gestartet, was mit einem erhöhten Salzverbrauch verbunden ist, während eine berechnete Wasserhärte, die kleiner ist als die tatsächliche Wasserhärte, zu einer zu spät eingeleiteten Regeneration und damit zu einem Härtedurchbruch führt. Um einen Härtedurchbruch zu vermeiden, wird im Stand der Technik zur Steuerung des Regenerationsvorganges in der Regel eine Wasserhärte zugrunde gelegt, die größer als die tatsächlich vorliegende Wasserhärte ist. Wird dieser Wert ebenfalls zur Steuerung der Verschneidung verwendet, so führt dies zu größeren Standardabweichungen bezüglich der erwünschten und tatsächlich vorliegenden Verschnittwasserhärte.

Beim erfindungsgemäßen Verfahren wird die Wasserhärte, die zur Steuerung des Regeneriervorgangs herangezogen wird, mittels einer ersten, aus einer Vielzahl von Wasseranalysen empirisch ermittelten Kalibrierkennlinie aus der gemessenen Leitfähigkeit bestimmt. Diese erste Kalibrierkennlinie (Kalibrierkurve) ist so definiert, dass die aus ihr bestimmte Wasserhärte zumindest in guter Näherung der maximalen, bei dieser Leitfähigkeit vorkommenden Wasserhärte entspricht. Damit wird vermieden, dass ein Regeneriervorgang zu spät gestartet wird, so dass ein Härtedurchbruch zuverlässig vermieden wird. Weiterhin wird der Verbrauch an Regeneriersalz nur geringfügig höher sein als bei Berücksichtigung der tatsächlich vorliegenden (und nur aufwändig genau bestimmbaren) Wasserhärte.

Würde diese erste Kalibrierkennlinie auch zur Steuerung der Verschneidevorrichtung (bzw. der Anteile von Roh- und Weichwasser im Verschnittwasser) eingesetzt, so würde in den meisten Fällen die Wasserhärte im Rohwasser überschätzt, und die tatsächliche Wasserhärte im Verschnittwasser wäre in den meisten Fällen niedriger als im Rahmen der Steuerung vorgegeben. Mit anderen Worten, die Abweichung der tatsächlichen Wasserhärte im Verschnittwasser vom Zielwert wäre weit größer als aufgrund der Variation der Wasserhärten bei gleichem Leitwert in verschiedenen Trinkwasserzusammensetzungen zu erwarten ist.

Das erfindungsgemäße Verfahren verwendet deshalb eine zweite Kalibrierkennline (Kalibrierkurve). Die aus der zweiten Kalibrierkurve bestimmte Wasserhärte ergibt sich aus einem Datensatz vieler Wasseranalysen als (zumin-

dest in guter Näherung) <u>mittlerer</u> Wert aller bei dieser Leitfähigkeit vorkommenden Wasserhärten. Mit dieser zweiten Kurve ist es möglich, eine größere Übereinstimmung zwischen der aus der Leitfähigkeit bestimmten Härte des Rohwassers und der tatsächlichen Wasserhärte im Rohwasser zu erhalten. Damit wird auch die Einstellung bzw. Steuerung der Wasserhärte im Verschnittwasser genauer. Die Standardabweichung der tatsächlichen Wasserhärte von der als Zielwert der Verschnitt-Steuerung eingestellten Wasserhärte entspricht dann im Wesentlichen nur der Variation, die sich aus den möglichen Wasserhärten verschiedener Wassertypen bei gleichem elektrischen Leitwert ergibt.

Die Erfindung sieht vor, dass die aus der ersten Kalibrierkennlinie abgeleitete Gesamthärte I zumindest abschnittsweise größer ist als die aus der zweiten Kalibrierkennlinie abgeleitete Gesamthärte II. Mit dieser Konstellation der Kalibrierkennlinien kann eine Unterschätzung der Rohwasserhärte bezüglich der Regeneration des Ionenaustauscherharzes vermieden werden, und ebenso eine systematische Überschätzung der Härte für die Verschnittsteuerung vermieden werden. Mit anderen Worten, es wird einerseits eine rechtzeitige Regeneration gewährleistet, andererseits kann die gewünschte Härte im Verschnittwasser leichter innerhalb strenger Toleranzgrenzen für jedes beliebige Rohwasser erhalten werden. Die Verwendung zweier unterschiedlicher Gesamthärten I und II berücksichtigt die unterschiedlichen vorgegebenen Toleranzen bei der Steuerung der Regeneration und der Verschneidung. Bei der Verschneidung ist eine Abweichung vom Sollwert nach oben und unten zugelassen, während bei der Bestimmung der Regenerationsauslösung lediglich ein zu früher, nicht jedoch ein zu später Start zulässig ist.

Durch die Verwendung der beiden Kalibrierkurven ist eine im Vergleich zum Stand der Technik viel genauere Verschneidung gewährleistet, wobei gleichzeitig Härtedurchbrüche zuverlässig vermieden werden. Im Rahmen der Erfindung ist es insbesondere gut möglich, vorgegebene Toleranzgrenzen der Härte im Verschnittwasser einzuhalten. Die Verwendung von teuren ionenselektiven Elektroden ist nicht erforderlich; das erfindungsgemäße Verfahren benötigt nur herkömmliche summarische Leitwerte.

Insbesondere können mittels der Erfindung die in der Norm E DIN 19636-100, 2006-07 festgelegten Toleranzgrenzen problemlos und kostengünstig eingehalten werden. In der besagten Norm heißt es: "Die Summe der Erdalkaliionen im Verschnittwasser darf bei jedem eingestellten Wert um nicht mehr als + 0,4 mol/m$^3$ und - 0,2 mol/m$^3$ von diesem abweichen." Bei Verwendung nur der ersten Kalibrierkurve wäre die Einhaltung der Norm meist nicht möglich (abhängig von der Schwankungsbreite der Rohwasserzusammensetzung).

Die Bestimmung des ersten Teilstroms $V(t)_{teil1weich}$ kann direkt (mittels eines Durchflussmessers in diesem Teilstrom) oder indirekt (mittels Durchflussmessern in anderen Volumenströmen, aus deren Messergebnisse sich der erste Teilstrom ergibt) erfolgen. Im Rahmen der vorliegenden Erfindung wird zumindest der erste Teilstrom (für die Bestimmung des Regenerationszeitpunkts), und bevorzugt auch der zweite Teilstrom (für eine genauere Kontrolle der Zusammensetzung des Verschnittwassers) bestimmt. Man beachte, dass es zur Bestimmung der beiden Teilströme $V(t)_{teil1weich}$ und $V(t)_{teil2roh}$ ausreicht, einen der beiden Teilströme direkt zu bestimmen (was beim ersten Teilstrom $V(t)_{teil1weich}$ sowohl vor als auch nach der Enthärtung erfolgen kann) und zusätzlich entweder den zufließenden (eingehenden) Rohwasserstrom $V(t)_{roh}$ oder den abfließenden (ausgehenden) Verschnittwasserstrom $V(t)_{verschnitt}$ zu bestimmen, wobei im Normalbetrieb der Wasserenthärtungsanlage gilt:

$$V(t)_{roh} = V(t)_{verschnitt} = V(t)_{teil1weich} + V(t)_{teil2roh}.$$

Der nicht direkt bestimmte Teilstrom kann dann durch Differenzbildung errechnet werden (indirekte Bestimmung des Teilstroms). Der Buchstabe t steht für die Zeit.

Die vorliegende Erfindung kann insbesondere dazu eingesetzt werden, Trinkwasser zu enthärten, insbesondere in Hauswasserversorgungssystemen. Eine erfindungsgemäß betriebene Wasserenthärtungsanlage kann an ein Hauswasserversorgungssystem ohne großen Installationsaufwand angeschlossen und sofort betrieben werden. Die Wasserenthärtungsanlage stellt sich über die Leitfähigkeitsmessung auf die lokale Wasserzusammensetzung automatisch ein, wobei durch die beiden Kalibrierkennlinien gute Härteabschätzungen sowohl für die automatische Steuerung der Regeneration als auch für die automatische Steuerung der Verschneidevorrichtung erreicht werden. Weitere manuelle Einstellungen (etwa zur Kalibrierung) sind nicht notwendig.

Bevorzugte Varianten der Erfindung

Bevorzugt ist eine Verfahrensvariante, bei der die erste Kalibrierkennlinie einen Umrechnungsfaktor von 28-35 μS/cm pro °dH, insbesondere 30-33 μS/cm pro °dH, verwendet. Mit diesen Werten wird für viele örtliche Trinkwasserzusammensetzungs-Variationen eine für die Regeneration sichere, und gleichzeitig salzsparende Umrechnung des Leitwerts auf die Wasserhärte vorgenommen. Die Auswertung der Analysen von etwa 300 verschiedenen Trinkwässern hat ergeben, dass bei Verwendung eines Umrechnungsfaktors von 28-35 μS/cm pro °dH, insbesondere 30-33 μS/cm pro °dH, die berechnete Wasserhärte einen oberen Grenzwert des Spektrums an tatsächlich bei dieser Leitfähigkeit

EP 2 231 526 B1

auftretenden Wasserhärten darstellt. Somit ist einerseits auf jeden Fall ein rechtzeitiger Beginn des Regenerationsvorgangs gewährleistet, andererseits wird nicht zu früh regeneriert, so dass die in der DIN EN 14743 vorgegebene (minimale) Austauschkapazität von 4 mol (400 g $CaCO_3$) pro Kilo eingesetztem Regeneriersalz ohne Mühe überschritten wird.

Bevorzugt ist ebenfalls eine Verfahrensvariante, bei der die zweite Kalibrierkennlinie einen Umrechnungsfaktor von 35-44 μS/cm pro °dH, insbesondere 38-41 μS/cm pro °dH, verwendet. Mit diesen Werten wird für viele örtliche Trinkwasserzusammensetzungs-Variationen eine für die Verschnittsteuerung recht exakte Umrechnung des Leitwerts auf die Wasserhärte vorgenommen. Wie die Auswertung der etwa 300 verschiedenen Trinkwasseranalysen zeigt, liegen mit diesem zweiten Umrechnungsfaktor berechnete Wasserhärten im mittleren Bereich des Spektrums an tatsächlich bei dieser Leitfähigkeit auftretenden Wasserhärten. Wird zur Steuerung der Verschneidung von Rohwasser und enthärtetem Wasser von einer derart berechneten Rohwasserhärte ausgegangen, so liegt die tatsächliche Verschnittwasserhärte ohne Mühe innerhalb der in der Norm E DIN 19636-100, 2006-07 festgelegten Toleranzgrenzen.

Bei einer besonders bevorzugten Verfahrensvariante ist vorgesehen, dass die elektronische Steuereinheit die Auslösung des Regeneriervorgangs anhand der aus der ersten Kalibrierkennlinie abgeleiteten Gesamthärte I des Rohwassers, der durch das Ionenaustauscherharz geflossenen Rohwassermenge (also der Weichwassermenge des integralen Teilstroms $V(t)_{teil1weich}$) und einer in der Steuereinheit abgespeicherten Kapazität des Ionenaustauscherharzes veranlasst. Durch Vergleich der aus der Rohwasserhärte und -menge ermittelten Anzahl an ausgetauschten Härtebildnern mit der anlagenspezifischen Kapazität wird gewährleistet, dass rechtzeitig und automatisch eine Regeneration des erschöpften Harzes eingeleitet wird.

Eine bevorzugte Verfahrensvariante sieht vor, dass die Steuerung der Verschneidevorrichtung nur anhand der aus der zweiten Kalibrierkennlinie abgeleiteten Gesamthärte II des Rohrwassers und der vorgegebenen Verschnittwasserhärte erfolgt. In dieser Variante wird auf die Anteile der beiden Teilströme am Verschnittwasser im Normalbetrieb der Wasserenthärtungsanlage nur über die Einstellung der Verschneidevorrichtung geschlossen (die sich bei verschiedenen Einstellungen der Verschneidevorrichtung ergebenden Anteile der Teilströme müssen hierzu vorab bestimmt und in der elektronischen Steuereinheit hinterlegt werden); eine Rückkopplung der Einstellung der Verschneidevorrichtung über eine Bestimmung der beiden Teilströme im Normalbetrieb erfolgt nicht. Dies vereinfacht die Steuerung der Verschneidung erheblich. Bei konstanten Druckverhältnissen an Zu- und Ableitung der Wasserenthärtungsanlage ist die Verschneidung für die meisten Anwendungen ausreichend genau. Diese Steuerungsvariante kann auch übergangsweise zu Beginn der Inbetriebnahme der Wasserenthärtungsanlage eingesetzt werden, so lange noch keine Messwerte für die beiden Teilströme für eine Rückkopplung zur Verfügung stehen.

Eine alternative, besonders bevorzugte Verfahrensvariante sieht vor, dass die Wasserenthärtungsanlage mindestens zwei Durchflussmesser aufweist, dass eine direkte oder indirekte Bestimmung des ersten Teilstroms $V(t)_{teil1weich}$ und des zweiten Teilstroms $V(t)_{teil2roh}$ mit den mindestens zwei Durchflussmessern erfolgt, und dass die Steuerung der Verschneidevorrichtung anhand der aus der zweiten Kalibrierkennlinie abgeleiteten Gesamthärte II des Rohwassers und einer vorgegebenen Verschnittwasserhärte in Rückkopplung mit den bestimmten Teilströmen $V(t)_{teil1weich}$ und $V(t)_{teil2roh}$ erfolgt. In dieser Variante werden die Teilströme im Normalbetrieb der Wasserenthärtungsanlage ständig kontrolliert (gemessen/bestimmt), und die Einstellung der Verschneidevorrichtung wird im Rahmen eines Regelkreises automatisch so nachgeführt, dass die Anteile der Teilströme im Verschnittwasser im Normalbetrieb jederzeit der Vorgabe entsprechen, die sich aus der gemessenen Rohwasserhärte (gemäß Gesamthärte II) und der vorgegebenen Verschnittwasserhärte ergibt. Dadurch können Schwankungen der Anteile der Teilströme im Verschnittwasser, die sich bei identischer Einstellung der Verschneidevorrichtung aufgrund von Schwankungen von Außenbedingungen (etwa der Druck des zulaufenden Rohwassers, oder die Größe des Entnahmeflusses von Verschnittwasser) etwaig ergeben, ausgeglichen werden, und die Verschnittwasserhärte bleibt im Normalbetrieb besonders genau am Sollwert. Bei bekannter Rohwasserhärte lässt sich durch Steuerung der Volumenströme von enthärtetem Wasser und zugemischtem Rohwasser jede beliebige Verschnittwasserhärte zwischen 0 °dH und der Härte des Rohwassers einstellen. Das Rohwasser kann beispielsweise über eine Bypassleitung dem enthärteten Wasser zugemischt werden. Zur exakten Einstellung der Verschnittwasserhärte muss die Rohwasserhärte genau bekannt sein. Die tatsächliche Rohwasserhärte weicht nur sehr wenig von der aus der zweiten Kalibrierkennlinie bestimmten Gesamthärte II des Rohwassers ab, so dass die Verschnittwasserhärte vom eingestellten Wert kaum abweicht.

Bei einer bevorzugten Verfahrensvariante wird die Leitfähigkeit der Regeneriermittellösung mittels eines weiteren Leitfähigkeitssensors bestimmt. Dies kann beispielsweise in der Zuleitung für Regeneriermittellösung zum Harzbett während des Regenerationsvorgangs erfolgen. Dadurch kann überprüft werden, ob die Salzkonzentration in der Regeneriermittellösung für eine Regeneration ausreichend ist. Bei einer zu geringen Salzkonzentration, beispielsweise bei Salzmangel oder bei unvollständiger Auflösung des Salzes in der Sole, findet lediglich eine unvollständige Regeneration des Harzes statt. Durch die Überprüfung der Solekonzentration mittels Leitfähigkeitsmessung wird eine unvollständige Regeneration und damit verbunden ein nachfolgender Härtedurchbruch vermieden. Eine zu geringe Salzkonzentration wird bevorzugt mittels eines optischen oder akustischen Signalgebers angezeigt.

In den Rahmen der vorliegenden Erfindung fällt auch eine Wasserenthärtungsanlage mit einer Ionenaustauschervorrichtung umfassend ein Ionenaustauscherharz, einem Vorratsgefäß für die Bereitstellung einer Regeneriermit-

5

tellösung zum Regenerieren des Ionenaustauscherharzes sowie einer Verschneidevorrichtung zum Mischen von Rohwasser und enthärtetem Wasser, einem Leitfähigkeitssensor zur Messung der Leitfähigkeit des Rohwassers, mindestens einem, bevorzugt zwei Durchflussmessern, sowie einer elektronischen Steuereinheit zur automatischen Steuerung eines Regeneriervorgangs und zur automatischen Steuerung der Verschneidevorrichtung,

die dadurch gekennzeichnet ist, dass die elektronische Steuereinheit einen Speicher mit mehreren abgespeicherten Kalibrierkennlinien umfasst, wobei mittels einer ersten Kalibrierkennlinie eine erste Gesamthärte I des Rohwassers, die zur automatischen Steuerung des Regeneriervorgangs des Ionentauscherharzes verwendet wird, und mittels einer zweiten Kalibrierkennlinie eine zweite Gesamthärte II des Rohwassers, die zur automatischen Steuerung der Verschneidevorrichtung verwendet wird, aus der Leitfähigkeit des Rohwassers bestimmbar ist, wobei die erste Kalibrierkennlinie von der zweiten Kalibrierkennlinie verschieden ist und die aus der ersten Kalibrierkennlinie abgeleitete Gesamthärte I zumindest abschnittsweise größer ist als die aus der zweiten Kalibrierkennlinie abgeleitete Gesamthärte II. Die Speicherung mehrerer Kalibrierkennlinien berücksichtigt, dass die Leitfähigkeit ein Summenparameter darstellt, der alle im Wasser gelösten Ionen erfasst, während die Wasserhärte lediglich von der Summe an Calcium- und Magnesium-Ionen abhängt. So schwankt die bei einer bestimmten Wasserhärte vorliegende Leitfähigkeit, je nachdem, welche Ionen außer Calcium- und Magnesium-Ionen im Wasser noch enthalten sind. Bei einem hohen Anteil an einwertigen Ionen wie Natrium oder Kalium ergibt sich beispielsweise eine entsprechend hohe Leitfähigkeit, obwohl die Gesamthärte, also der Gehalt an Calcium- und Magnesium-Ionen gering sein kann. Andererseits kann ein natriumarmes Wasser mit einem hohen Anteil Calcium- und Magnesium-Ionen eine große Wasserhärte trotz relativ geringer Leitfähigkeit aufweisen. Dies bedeutet, dass die bei einer bestimmten Leitfähigkeit vorliegende Wasserhärte innerhalb eines bestimmten Intervalls liegt. Die beiden Kalibrierkurven berücksichtigen dieses Intervall. Dadurch ist eine korrekte Steuerung von Regeneration und Verschneidung möglich. Die erfindungsgemäße Wasserenthärtungsanlage ist insbesondere geeignet für ein oben genanntes, erfindungsgemäßes Betriebsverfahren.

Eine bevorzugte Ausführungsform der erfindungsgemäßen Wasserenthärtungsanlage sieht vor, dass der Leitfähigkeitssensor, mindestens ein Durchflussmesser und/oder die Verschneidevorrichtung in einem Anschlusszwischenstück zum Anbau der Wasserenthärtungsanlage an eine Rohrleitung eines Wassernetzes angeordnet sind. Das Anschlusszwischenstück beinhaltet Kanäle für das gesamte, zufließende Rohwasser und das abfließende (teil-)enthärtete Verschnittwasser und kann an ein beliebiges, bereits vorhandenes Anschlussstück angeschlossen werden. Ein separater Anschluss ist nicht notwendig. Dadurch ist der Einbau platzsparend, einfach und kostengünstig.

Eine andere, bevorzugte Ausführungsform sieht vor, dass der Leitfähigkeitssensor, mindestens ein Durchflussmesser und/oder die Verschneidevorrichtung in einem Steuerkopf der Wasserenthärtungsanlage angeordnet sind. Diese Ausführungsform ermöglicht eine besonders kompakte und kostengünstige Bauweise.

Bevorzugt ist auch eine Ausführungsform, bei der eine Bypassleitung vorgesehen ist, in der die Verschneidevorrichtung und ein Durchflussmesser für den zweiten Teilstrom $V(t)_{teil2roh}$ des für die Verschneidung verwendeten Rohwassers angeordnet sind. Derartige Bypassleitungen ermöglichen eine einfache Bauweise der Enthärtungsanlage. Zudem ist es möglich, über die Bypassleitung Stoffe wie Korrosionsschutzmittel zur weiteren Wasseraufbereitung zu dosieren. Die Bypassleitung verläuft parallel zu dem Leitungsstrang, welcher die Ionenaustauschervorrichtung enthält.

Besonders bevorzugt ist eine Ausführungsform, welche vorsieht, dass die Verschneidevorrichtung ein Verschneideventil, insbesondere ein Bypassventil, und einen Stellmotor umfasst, der von der elektronischen Steuereinheit angesteuert wird. Mit dem Stellmotor kann das Verschneideventil gut automatisch angesteuert werden. Mit einer ein Bypassventil enthaltenden Verschneidevorrichtung ist es auf einfache Weise möglich, durch partielles Öffnen bzw. Schließen des Bypassventils jedes Mischungsverhältnis zwischen Rohwasser und enthärtetem Wasser zu erhalten.

Bei einer anderen, bevorzugten Ausführungsform ist ein weiterer Leitfähigkeitssensor derart angeordnet, dass er mit der Regeneriermittellösung in Kontakt kommt. Dies kann beispielsweise in der Zuleitung für Regeneriermittellösung zum Harzbett oder im Solebehälter selbst sein. Dadurch kann die Konzentration der Salzsole während der Regeneration des Ionenaustauschers kontrolliert werden. Bei einer zu geringen Salzkonzentration, z.B. durch Salzmangel oder bei unzureichenden Lösezeiten, kann das Ionenaustauscherharz nicht vollständig regeneriert werden, so dass es zu einem frühzeitigen Härtedurchbruch kommt. Durch Kontrolle der Solekonzentration mittels Leitfähigkeitssensor wird dies vermieden. Bevorzugt ist weiterhin ein akustischer oder optischer Signalgeber vorgesehen, der eine zu niedrige Konzentration der Regeneriermittellösung meldet.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1    eine Diagramm-Darstellung der titrimetrisch bestimmten Gesamthärte in Abhängigkeit von der gemessenen Leitfähigkeit bei verschiedenen Trinkwässern;

Fig. 2:    den schematischen Aufbau einer ersten Ausführungsform einer erfindungsgemäßen Wasserenthärtungsanlage;

Fig. 3:    den schematischen Aufbau einer zweiten Ausführungsform einer erfindungsgemäßen Wasserenthärtungsanlage.

Die vorliegende Erfindung beschäftigt sich mit der Problematik, für Wasser, insbesondere Trinkwasser oder Hauswasser, die Wasserhärte so zu bestimmen, dass einerseits die Regeneration eines Ionentauschers und andererseits die Einstellung der Wasserhärte in einem Verschnittwasser (gemischt aus Roh- und Weichwasser) in einer Wasserenthärtungsanlage mit guter Genauigkeit erfolgt. Eine einfache Möglichkeit, die Wasserhärte von Rohwasser abzuschätzen, ist die Messung der elektrischen Leitfähigkeit des Rohwassers.

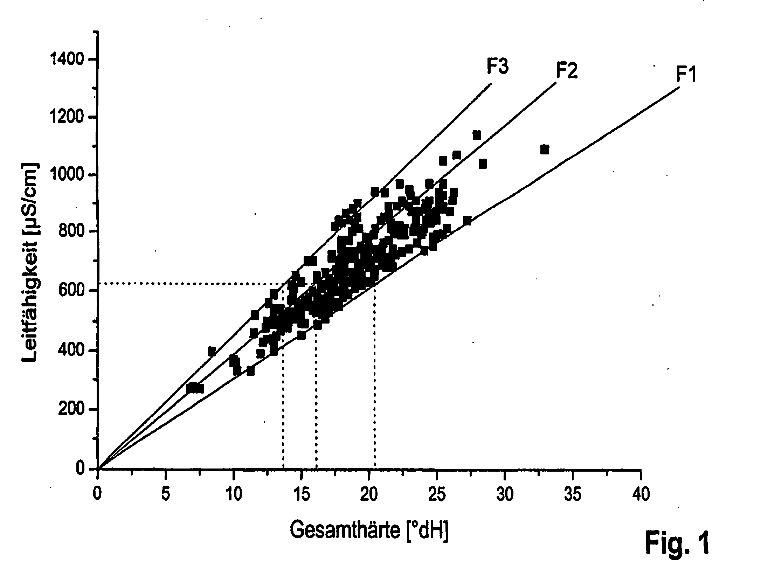

Zur Darstellung in Fig. 1 wurden ca. 300 verschiedene Trinkwässer in der Bundesrepublik Deutschland untersucht und deren Leitfähigkeit sowie die Gesamthärte bestimmt. Die Messung der Leitfähigkeit erfolgte mittels Konduktometer, während die Gesamthärte titrimetrisch ermittelt wurde.

Die Bestimmung der Gesamthärte anhand einer Leitfähigkeitsmessung ist im Gegensatz zur titrimetrischen Bestimmungsmethode schnell und einfach durchführbar und deshalb zur Steuerung in Wasserenthärtungsanlagen weit verbreitet. Man erkennt aber in Fig. 1, dass Wässer, deren Leitfähigkeit beispielsweise mit 625 $\mu$S/cm ermittelt wurde, eine Gesamthärte zwischen etwa 14°dH und 20°dH aufweisen. Im Allgemeinen lässt sich aus der elektrischen Leitfähigkeit eines Wassers nicht auf einen exakten Härtewert schließen, sondern nur auf einen Bereich, in dem die Wasserhärte tatsächlich liegen wird. Die Variation der Wasserhärte in Abhängigkeit von der Leitfähigkeit kann dabei über Probenahmen ermittelt werden. Im Rahmen der vorliegenden Erfindung wird diese Variation typischerweise für eine geplante Einsatzregion einer Wasserenthärtungsanlage, wie hier die Bundesrepublik Deutschland, vorab bestimmt.

Um bei einer Wasserenthärtungsanlage einen Härtedurchbruch zu vermeiden, muss mit dem Regenerationsvorgang des erschöpften Ionenaustauscherharzes rechtzeitig begonnen werden. Die aus der gemessenen Leitfähigkeit bestimmte Gesamthärte I, die zur Steuerung des Regenerationsvorgangs herangezogen wird, darf deshalb nicht kleiner sein als die größte, bei dieser Leitfähigkeit titrimetrisch bestimmte, d.h. in der Praxis auftretende Gesamthärte. Nur so ist garantiert, dass die Regeneration bei jeder beliebigen Wasserzusammensetzung rechtzeitig gestartet wird. Die Bestimmung der Gesamthärte I aus der gemessenen Leitfähigkeit zur Steuerung der Regeneration wird deshalb mittels einer ersten Kalibrierkennlinie F1 durchgeführt. Diese erste Kalibrierkennlinie F1 gibt (zumindest in guter Näherung) die maximal auftretende Gesamthärte in Abhängigkeit von der Leitfähigkeit wieder; F1 besitzt hier (in Fig. 1) eine Steigung von etwa 31 $\mu$S/cm°dH und verläuft als Ursprungsgerade.

Um einen Härtedurchbruch zu vermeiden, könnte zwar auch eine Kalibrierkennlinie mit einer noch geringeren Steigung als F1 eingesetzt werden; in diesem Fall würde jedoch Regeneriersalz verschwendet. Die für Enthärter gültige Norm DIN EN 14743 sieht vor, dass je Kilogramm des während einer Regeneration verwendeten Salzes mindestens eine Austauschkapazität von 4 mol (400 g $CaCO_3$) erzielt werden muss und limitiert somit den Salzverbrauch. Es wird deshalb im Rahmen der Erfindung zur Bestimmung der Gesamthärte bevorzugt keine Kalibrierkennlinie verwendet, deren Steigung merklich geringer ist als diejenige von F1. Dadurch ist sichergestellt, dass die Anforderungen der DIN EN 14743 bezüglich der Besalzung gut zu erfüllen sind.

Aus gesundheitlichen, technischen oder wirtschaftlichen Gründen ist es oft notwendig, lediglich teilenthärtetes Wasser einzusetzen. Hierzu ist eine Vorrichtung zum Mischen von enthärtetem Wasser und Rohwasser notwendig. In der Regel wünscht ein Anwender einen bestimmten Zielwert von Wasserhärte mit gewissen Toleranzen im Verschnittwasser einzuhalten. Zusätzlich sieht die E DIN 19636-100, 2006-07 maximale Toleranzen vor, beispielsweise dass die Summe der Erdalkali-Ionen im Verschnittwasser bei unterschiedlichen Volumenströmen und einem Zielwert von 8 °dH um nicht mehr als + 0,4 mol/m$^3$ und - 0,2 mol/m$^3$ von diesem abweichen darf. Bei einem eingestellten Wert von 8°dH muss der tatsächliche Wert im Verschnittwasser dann zwischen 6.9°dH und 10,2 °dH liegen.

Um möglichst enge Toleranzgrenzen der Verschnittwasserhärte - und insbesondere die obige Norm - einhalten zu können, sieht die Erfindung vor, die Bestimmung der Gesamthärte II aus der gemessenen Leitfähigkeit des Rohwassers zur Steuerung der Verschneidevorrichtung mittels einer zweiten Kalibrierkennlinie F2 durchzuführen. Die zweite Kalibrierkennline F2 gibt (zumindest in guter Näherung) die gemittelte auftretende Gesamthärte in Abhängigkeit von der Leitfähigkeit wieder. Die Kalibrierkennlinie F2 besitzt hier (in Fig. 1) eine Steigung von etwa 39 $\mu$S/cm°dH und verläuft ebenfalls als Urpsrungsgerade.

Anhand dieser zweiten Kalibrierkennlinie F2 ermittelt man z.B. bei einer gemessenen Leitfähigkeit von 625 $\mu$S/cm eine Gesamthärte II von 16°dH. Fig. 1 zeigt, dass Wässer, deren Leitfähigkeit mit 625 $\mu$S/cm ermittelt wurde,

eine Gesamthärte zwischen etwa 14°dH und 20°dH aufweisen. Die untere Grenze wird dabei durch die Gerade F3 mit einer Steigung von etwa 46 µS/cm°dH bestimmt, während die Kalibrierkennlinie F1 die maximale Gesamthärte I in Abhängigkeit von der Leitfähigkeit wiedergibt. Um eine vorgegebene Verschnittwasserhärte von beispielsweise 8 °dH zu erzielen, muss das Rohwasser mit enthärtetem Wasser im Verhältnis 1:1 gemischt werden. Selbige Verschneidung führt bei einer Rohwasserhärte von 14 °dH zu einer Verschnittwasserhärte von 7 °dH, wohingegen eine derartige Verschneidung von Rohwasser und enthärtetem Wasser bei einer Rohwasserhärte von 20 °dH eine Verschnittwasserhärte von 10°dH ergibt. Bei einer eingestellten Verschnittwasserhärte von 8 °dH beträgt die tatsächliche Verschnittwasserhärte somit 7 °dH bis 10 °dH. Die Vorgabe der Norm E DIN 19636-100, 2006-07 bezüglich der Verschneideeinrichtung ist somit in jedem Fall erfüllt, wenn zur Bestimmung der Gesamthärte II aus der Leitfähigkeit die Kalibrierkennlinie F2 herangezogen wird.

Würde man die mit der Kalibrierkennlinie F1 bestimmte Gesamthärte I bei 625 µS/cm von 20 °dH zur Steuerung der Verschneidung heranziehen, so müsste man das Rohwasser mit enthärtetem Wasser im Verhältnis 1:1,5 mischen, um eine Verschnittwasserhärte von 8°dH zu erhalten. Selbiges Mischungsverhältnis würde bei einer Rohwasserhärte von 14 °dH zu einer Verschnittwasserhärte von 5,6 °dH führen. Dies liegt außerhalb der vorgegebenen Toleranzgrenzen. Die für die Steuerung der Regeneration verwendete Kalibrierkennlinie F1 ist deshalb zur Steuerung der Verscheidevorrichtung nicht geeignet.

Die Verwendung zweier unterschiedlicher Gesamthärten I und II berücksichtigt die unterschiedlichen vorgegebenen Toleranzen bei der Steuerung der Regeneration und der Verschneidung. Bei der Verschneidung ist eine Abweichung vom Sollwert nach oben und unten zugelassen, während bei der Bestimmung der Regenerationsauslösung lediglich ein zu früher, nicht jedoch ein zu später Start zulässig ist.

Die Gesamthärten I und II sind hypothetische Werte, fehlerbehaftet durch den unterschiedlichen Anteil an einwertigen Ionen wie Natrium und Kalium bei verschiedenen Wässern. Mit den beiden Kalibrierkennlinien F1 und F2 werden unterschiedliche Fehlertoleranzen zugelassen bzw. genutzt.

Man beachte, dass die Kalibrierkennlinien F1 und F2 im gezeigten Beispiel als Geraden verlaufen, was die rechnerische Beschreibung der Kalibrierkennlinien erleichtert. Grundsätzlich sind aber erfindungsgemäß auch nichtlineare Kalibrierkurven für die Bestimmung der Gesamthärten I und II denkbar, die beispielsweise als Polynome angenähert werden.

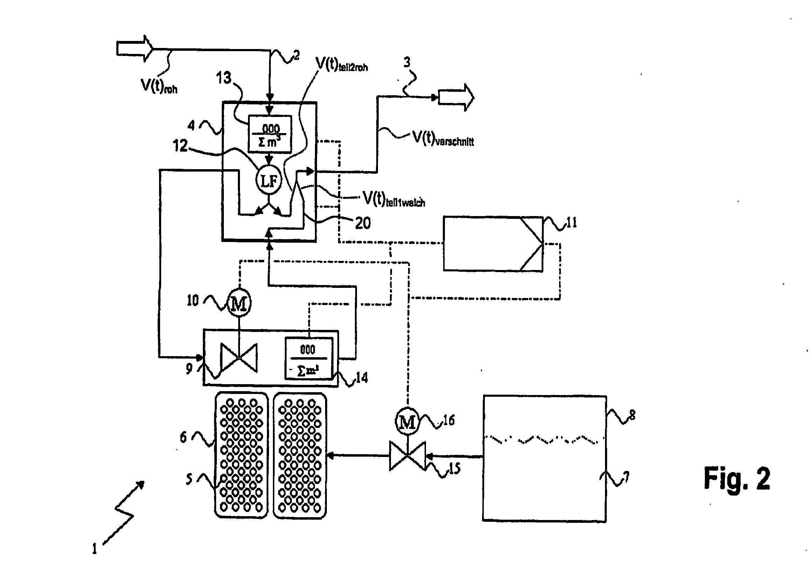

Die **Figur 2** zeigt einen schematischen Aufbau einer ersten Ausführungsform der erfindungsgemäßen Wasserenthärtungsanlage **1** mit einem Zulauf **2** für zulaufendes Rohwasser und einem Ablauf **3** für ablaufendes enthärtetes bzw. teilenthärtetes Wasser, einem Anschlusszwischenstück **4** zum Anbau einer mit Ionenaustauscherharz **5** gefüllten Ionenaustauschvorrichtung **6** an eine Rohrleitung eines Wassernetzes sowie einem mit Salzsole (Regeneriermittellösung) **7** gefüllten Behälter **8** zur Regeneration von erschöpftem Ionenaustauscherharz 5. Die Bereitstellung von tellenthärtetem Wasser durch Mischen von Rohwasser und enthärtetem Wasser erfolgt mit Hilfe eines Verschneideventils **9,** das über einen Stellmotor **10** angesteuert wird. Eine elektronische Steuervorrichtung **11** empfängt Signale eines im Anschlusszwischenstück **4** im Rohwasserbereich angeordneten Leitfähigkeitssensors **12** und eines ebenfalls dort angeordneten Wasserzählers (Durchflussmessers) **13** für den gesamten eingehenden Rohwasservolumenstrom $V(t)_{roh}$ sowie eines Wasserzählers **14,** der den Volumenstrom (erster Teilstrom) an enthärtetem Wasser $V(t)_{teil1weich}$ erfasst. Die Wasserzähler **13, 14** erfassen den momentanen (bei Zeit t vorliegenden) Volumenstrom und addieren mit Hilfe der elektronischen Steuervorrichtung das Wasservolumen. In der elektronischen Steuervorrichtung 11 sind die zwei Kalibrierkennlinien F1 und F2 hinterlegt, mit denen jeweils ein Wert für die Gesamthärte des Rohwassers ermittelt wird.

Die mit der ersten Kalibrierkennlinie F1 berechnete Gesamthärte I sowie die mit dem Wasserzähler 14 gemessene, durch die Ionenaustauschervorrichtung 6 geströmte Wassermenge werden zur Steuerung der Regeneration des Ionenaustauscherharzes 5 verwendet. Hierzu wird bei Erreichen des Erschöpfungszustandes des Ionenaustauscherharzes 5 ein Ventil **15** mit Hilfe eines Motors **16** derart angesteuert, dass Salzsole in die Ionenaustauschervorrichtung 6 fließen kann und das Ionenaustauscherharz 5 regeneriert wird (Während der Regeneration sollte der normale Wasserstrom durch das Ionenaustauscherharz 5 unterbunden sein; in dieser Zeit kann der Wasserstrom jedoch durch einen weiteren Behälter mit Ionentauscherharz geleitet werden, so genannter "Pendelbetrieb". Im Rahmen der Erfindung weist die Ionenaustauschervorrichtung 6 vorteilhafter Weise zwei mit Ionenaustauscherharz 5 gefüllte Behälter für besagten Pendelbetrieb auf).

Für die Steuerung der Verschneidung wird die Gesamthärte II mit der zweiten in der elektronischen Steuerung hinterlegten Kalibrierkennlinie F2 berechnet. Der momentane zweite Teilstrom $V(t)_{teil2roh}$ an nicht enthärtetem Rohwasser, der dem Verschnittwasserstrom $V(t)_{verschnitt}$ zugeführt wird, wird als Differenz der momentanen Volumenströme $V(t)_{roh}$ und $V(t)_{teil1weich}$ in der Steuervorrichtung 11 errechnet. Die Mischungsanteile $V(t)_{teil2roh}$ und $V(t)_{teil1weich}$ sind durch die Rohwasserhärte und die Verschnittwasserhärte vorgegeben und in der elektronischen Steuervorrichtung 11 hinterlegt bzw. werden von dieser berechnet. Das Verschneideventil 9 wird entsprechend der gewünschten Härte im Verschnittwasser über den Stellmotor 10 angesteuert. Zur Kontrolle (insbesondere Rückkopplung) dienen der Wasserzähler 13 im Rohwasserbereich und der Wasserzähler 14, der den Teilstrom an enthärtetem Wasser erfasst. Im Leitungsabschnitt **20,** welcher den ersten Teilstrom $V(t)_{teil1weich}$ von Weichwasser führt, kann ein Rückschlagventil (nicht eingezeichnet) vorgesehen sein, um zu verhindern, dass Rohwasser in den Ablauf der Ionenaustauschervorrichtung 6 einfließt.

In der Ausführungsform der Erfindung von Fig. 1 sind einzelne Komponenten wie der Leitfähigkeitssensor 12 und der Wasserzähler 13 im Anschlusszwischenstück 4 angeordnet. Ein derartiges Anschlusszwischenstück 4 kann an ein beliebiges, bereits vorhandenes Anschlussstück angeschlossen werden. Ein separater Anschluss ist nicht notwendig. Dadurch ist der Einbau der erfindungsgemäßen Anlage 1 platzsparend, einfach und kostengünstig.

Ebenso ist es möglich, die einzelnen Komponenten der Wasserenthärtungsanlage 1 auf eine andere Art und Weise anzuordnen.

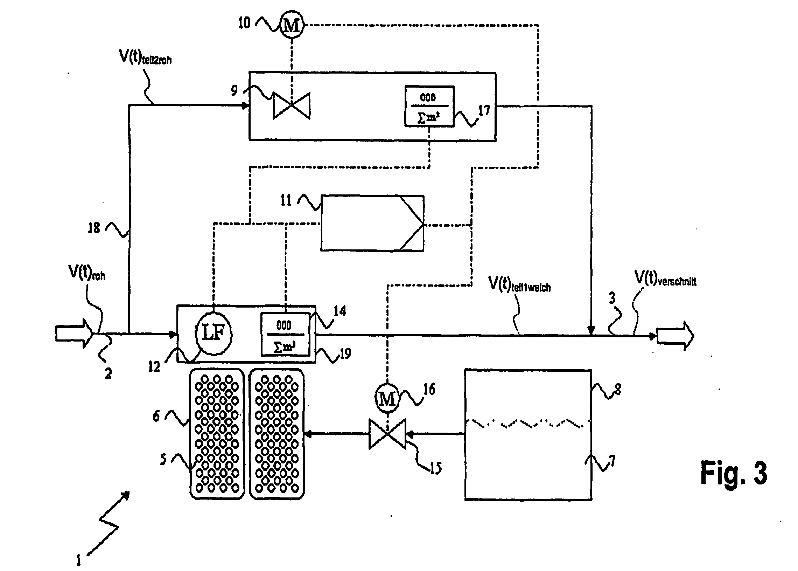

Eine weitere Ausführungsform einer erfindungsgemäßen Wasserenthärtungsanlage 1 zeigt Figur 3. Es werden nur die wesentlichen Abänderungen gegenüber der vorhergehenden Ausführungsform erläutert.

In der Ausführungsform von Fig. 3 befinden sich das Verschneideventil 9 sowie ein Wasserzähler (Durchflussmesser) **17** in einer Bypassleitung **18** zur Ionenaustauschervorrichtung 6. Der Wasserzähler 17 erfasst direkt die Teil-menge $V(t)_{teil2roh}$ an Rohwasser, die dem enthärteten Wasser $V(t)_{teil1weich}$ zugemischt wird. Die Signale werden an die elektronische Steuervorrichtung **11** weitergeleitet, die entsprechend der vorgegeben Verschnittwasserhärte das Verschneideventil 9 über den Stellmotor **10** ansteuert. Die elektronische Steuervorrichtung 11 kann in einem Steuerkopf **19** der lonenaustauschervorrichtung 6 integriert sein oder extern angeordnet sein. Ebenso sind in dieser beispielhaften Ausführungsform der Leitfähigkeitssensor 12 zur Messung der Leitfähigkeit des Rohwassers und der Wasserzähler 14, der die Menge an enthärtetem Wasser (also $V(t)_{teil1weich}$) misst, im Steuerkopf 19 positioniert (wobei die Leitfähigkeitsmessung vor der Enthärtung erfolgt). In der elektronischen Steuervorrichtung 11 sind wiederum zwei verschiedene Kalibrierkennlinien F1 und F2 zur Bestimmung der Gesamthärte des Rohwassers aus der mit Hilfe des Leitfähigkeitssensors 12 gemessenen Leitfähigkeit abgespeichert.

Zusammenfassend schlägt die Erfindung vor, bei einer Wasserenthärtungsvorrichtung (1), welche einen zu-fließenden Rohwasserstrom $V(t)_{roh}$ in zwei Teilströme $V(t)_{teil1weich}$, $V(t)_{teil2roh}$ aufspaltet, einen Teilstrom $V(t)_{teil1weich}$ einer Vollenthärtung unterzieht, und danach die beiden Teilströme zu einem Verschnittwasserstrom $V(t)_{verschnitt}$ vereint, für die Ermittlung der Wasserhärte aus der elektrischen Leitfähigkeit des Rohwassers zwei verschiedene Umrechungen von der gemessenen elektrischen Leitfähigkeit auf die Rohwasserhärte vorzusehen. Die Umrechnung mit einer ersten Kalibrierkurve (F1) ist konservativ und gibt die maximal auftretenden Wasserhärten bei verschiedenen Leitfähigkeiten wieder; sie wird zur automatischen Steuerung der Regeneration eines Ionenaustauscherharzes (5) bei bekannter Kapazität des Ionenaustauscherharzes verwendet. Die Umrechnung mit einer zweiten Kalibrierkurve (F2) ist realitätsnah und gibt die mittleren (d.h. mit dem kleinsten statistischen Fehler behafteten) Wasserhärten bei verschiedenen Leitfähigkeiten wieder; sie wird zur Steuerung der Verschneidevorrichtung (d.h. der Anteile der beiden Teilströme am Verschnittwasser) eingesetzt. Mit der Erfindung können experimentell ermittelte Variationen in der Wasserzusammensetzung (und damit unterschiedliche Zusammenhänge von Leitfähigkeit und Wasserhärte) berücksichtigt werden, um den Regenerationszeitpunkt optimal zu bestimmen und Toleranzen der Verschnittwasserhärte gegenüber einem Sollwert zu minimieren.

Bezugszeichenliste

| | |
|---|---|
| 1 | Wasserenthärtungsanlage |
| 2 | Zulauf für Rohwasser |
| 3 | Ablauf für (teil-)enthärtetes Verschnittwasser |
| 4 | Anschlusszwischenstück |
| 5 | Ionenaustauscherharz |
| 6 | Ionenaustauschervorrichtung |
| 7 | Salzsole (Regeneriermittellösung) |
| 8 | Solebehälter (Vorratsgefäß) |
| 9 | Verschneideventil |
| 10 | Stellmotor |
| 11 | elektronische Steuervorrichtung |
| 12 | Leitfähigkeitssensor |
| 13 | Wasserzähler Rohwasser (gesamtes zufließendes Rohwasser) |
| 14 | Wasserzähler enthärtetes Wasser (erster Teilstrom) |
| 15 | Ventil |
| 16 | Stellmotor |
| 17 | Wasserzähler Rohwasser (zweiter Teilstrom) |
| 18 | Bypassleitung |

19 Steuerkopf
20 Leitungsabschnitt

**Patentansprüche**

1. Verfahren zum Betrieb einer Wasserenthärtungsanlage (1) mit einer Ionenaustauschervorrichtung (6) umfassend ein Ionenaustauscherharz (5), einem Vorratsgefäß (8) für die Bereitstellung einer Regeneriermittellösung (7) zum Regenerieren des Ionenaustauscherharzes (5), einer Verschneidevorrichtung, sowie mindestens einem Durchflussmesser (13, 14, 17),
wobei ein der Wasserenthärtungsanlage (1) zufließender Volumenstrom $V(t)_{roh}$ von Rohwasser vor oder in der Wasserenthärtungsanlage (1) auf einen ersten Teilstrom und einen zweiten Teilstrom aufgeteilt wird, und der erste Teilstrom über das Ionenaustauscherharz (5) geleitet wird und dieser enthärtete Teilstrom $V(t)_{teil1weich}$ dem zweiten, rohwasserführenden Teilstrom $V(t)_{teil2roh}$ zugemischt wird,
wodurch in oder hinter der Wasserenthärtungsanlage (1) ein abfließender Volumenstrom $V(t)_{verschnitt}$ von Verschnittwasser gebildet wird,
wobei über die Verschneidevorrichtung das Verhältnis von erstem und zweitem Teilstrom im abfließenden Volumenstrom $V(t)_{verschnitt}$ von Verschnittwasser einstellbar ist,
wobei das Verfahren folgende Schritte aufweist:

- Bestimmung der Leitfähigkeit des Rohwassers mittels eines Leitfähigkeitssensors (12) und daraus Bestimmung der Gesamthärte des Rohwassers mit einer in einer elektronischen Steuereinheit (11) hinterlegten Kalibrierkennlinie,
- direkte oder indirekte Bestimmung des ersten Teilstroms $V(t)_{teil1weich}$ mit dem mindestens einen Durchflussmesser (13, 14, 17),

**dadurch gekennzeichnet,**
**dass** eine Gesamthärte I des Rohwassers, die zur automatischen Steuerung des Regeneriervorgangs des Ionenaustauscherharzes (5) verwendet wird, mittels einer ersten Kalibrierkennlinie (F1) aus der gemessenen Leitfähigkeit abgeleitet wird,
und eine Gesamthärte II des Rohwassers, die zur automatischen Steuerung der Verschneidevorrichtung verwendet wird, mittels einer zweiten Kalibrierkennlinie (F2) aus der gemessenen Leitfähigkeit abgeleitet wird, wobei die zweite Kalibrierkennlinie (F2) von der ersten Kalibrierkennlinie (F1) verschieden ist und die aus der ersten Kalibrierkennlinie (F1) abgeleitete Gesamthärte I zumindest abschnittsweise größer ist als die aus der zweiten Kalibrierkennlinie (F2) abgeleitete Gesamthärte II.

2. Verfahren nach Anspruch 1, **dadurch gekennzeichnet, dass** die erste Kalibrierkennlinie (F1) einen Umrechnungsfaktor von 28-35 $\mu$S/cm pro °dH, insbesondere 30-33 $\mu$S/cm pro °dH, verwendet.

3. Verfahren nach einem der vorhergehenden Ansprüche, **dadurch gekennzeichnet, dass** die zweite Kalibrierkennlinie (F2) einen Umrechnungsfaktor von 35-44 $\mu$S/cm pro °dH, insbesondere 38-41 $\mu$S/cm pro °dH, verwendet.

4. Verfahren nach einem der vorhergehenden Ansprüche, **dadurch gekennzeichnet, dass** die elektronische Steuereinheit (11) die Auslösung des Regeneriervorgangs anhand der aus der ersten Kalibrierkennlinie (F1) abgeleiteten Gesamthärte I des Rohwassers, der durch das Ionenaustauscherharz (5) geflossenen Rohwassermenge und einer in der Steuereinheit (11) abgespeicherten Kapazität des Ionenaustauscherharzes (5) veranlasst.

5. Verfahren nach einem der Ansprüche 1 bis 4, **dadurch gekennzeichnet, dass** die Steuerung der Verschneidevorrichtung nur anhand der aus der zweiten Kalibrierkennlinie (F2) abgeleiteten Gesamthärte II des Rohrwassers und der vorgegebenen Verschnittwasserhärte erfolgt.

6. Verfahren nach einem der Ansprüche 1 bis 4, **dadurch gekennzeichnet,**
**dass** die Wasserenthärtungsanlage (1) mindestens zwei Durchflussmesser (13, 14, 17) aufweist,
**dass** eine direkte oder indirekte Bestimmung des ersten Teilstroms $V(t)_{teil1weich}$ und des zweiten Teilstroms $V(t)_{teil2roh}$ mit den mindestens zwei Durchflussmessern (13, 14, 17) erfolgt,
und **dass** die Steuerung der Verschneidevorrichtung anhand der aus der zweiten Kalibrierkennlinie (F2) abgeleiteten Gesamthärte II des Rohwassers und einer vorgegebenen Verschnittwasserhärte in Rückkopplung mit den bestimmten Teilströmen $V(t)_{teil1weich}$ und $V(t)_{teil2roh}$ erfolgt.

7. Verfahren nach einem der vorhergehenden Ansprüche, **dadurch gekennzeichnet, dass** die Leitfähigkeit der Regeneriermittellösung (7) mittels eines weiteren Leitfähigkeitssensors bestimmt wird.

8. Wasserenthärtungsantage (1) mit einer Ionenaustauschervorrichtung (6) umfassend ein Ionenaustauscherharz (5), einem Vorratsgefäß (8) für die Bereitstellung einer Regeneriermittellösung (7) zum Regenerieren des Ionenaustauscherharzes (5) sowie einer Verschneidevorrichtung zum Mischen von Rohwasser und enthärtetem Wasser, einem Leitfähigkeitssensor (12) zur Messung der Leitfähigkeit des Rohwassers, mindestens einem, bevorzugt zwei Durchflussmessern (13, 14, 17), sowie einer elektronischen Steuereinheit (11) zur automatischen Steuerung eines Regeneriervorgangs und zur automatischen Steuerung der Verschneidevorrichtung,

   **dadurch gekennzeichnet,**

   **dass** die elektronische Steuereinheit (11) einen Speicher mit mehreren abgespeicherten Kalibrierkennlinien (F1, F2) umfasst, wobei mittels einer ersten Kalibrierkennlinie (F1) eine erste Gesamthärte I des Rohwassers, die zur automatischen Steuerung des Regeneriervorgangs des Ionenaustauscherharzes (5) verwendet wird, und mittels einer zweiten Kalibrierkennlinie (F2) eine zweite Gesamthärte II des Rohwassers, die zur automatischen Steuerung der Verschneidevorrichtung verwendet wird, aus der Leitfähigkeit des Rohwassers bestimmbar ist, wobei die erste Kalibrierkennlinie (F1) von der zweiten Kalibrierkennlinie (F2) verschieden ist und die aus der ersten Kalibrierkennlinie (F1) abgeleitete Gesamthärte I zumindest abschnittsweise größer ist als die aus der zweiten Kalibrierkennlinie (F2) abgeleitete Gesamthärte II.

9. Wasserenthärtungsanlage (1) nach Anspruch 8, **dadurch gekennzeichnet, dass** der Leitfähigkeitssensor (12), mindestens ein Durchflussmesser (13, 14, 17) und/oder die Verschneidevorrichtung in einem Anschlusszwischenstück (4) zum Anbau der Wasserenthärtungsanlage (1) an eine Rohrleitung eines Wassernetzes angeordnet sind.

10. Wasserenthärtungsanlage (1) nach Anspruch 8 oder 9, **dadurch gekennzeichnet, dass** der Leitfähigkeitssensor (12), mindestens ein Durchflussmesser (13, 14, 17) und/oder die Verschneidevorrichtung in einem Steuerkopf der Wasserenthärtungsanlage (1) angeordnet sind.

11. Wasserenthärtungsanlage (1) nach einem der Ansprüche 8 bis 10, **dadurch gekennzeichnet, dass** eine Bypassleitung (18) vorgesehen ist, in der die Verschneidevorrichtung und ein Durchflussmesser (17) für den zweiten Teilstrom $V(t)_{teil2roh}$ des für die Verschneidung verwendeten Rohwassers angeordnet sind.

12. Wasserenthärtungsanlage (1) nach einem der Ansprüche 8 bis 11, **dadurch gekennzeichnet, dass** die Verschneidevorrichtung ein Verschneideventil (9), insbesondere ein Bypassventil, und einen Stellmotor (10) umfasst, der von der elektronischen Steuereinheit (11) angesteuert wird.

13. Wasserenthärtungsanlage (1) nach einem der Ansprüche 8 bis 12, **dadurch gekennzeichnet, dass** ein weiterer Leitfähigkeitssensor derart angeordnet ist, dass er mit der Regeneriermittellösung (7) in Kontakt kommt.

**Claims**

1. A method for operating a water softening system (1) having: an ion exchange device (6) comprising an ion exchange resin (5), a supply vessel (8) for supplying a regenerant solution (7) for regenerating the ion exchange resin (5), an admixing device, and at least one flow meter (13, 14,17),

   wherein an influent volume flow $V(t)_{raw}$ of raw water towards the water softening system (1) is divided into a first partial volume flow and a second partial volume flow upstream of or within the water softening system (1), with the first partial volume flow being guided through the ion exchange resin (5) and that softened partial volume flow $V(t)_{partial1soft}$ being admixed to the second, raw water-bearing partial volume flow $V(t)_{partial2raw}$,

   whereby in or downstream of the water softening system (1) an effluent volume flow $V(t)_{admixed}$ of admixed water is formed,

   wherein the ratio between the first and second partial volume flow in the effluent volume flow $V(t)_{admixed}$ of the admixed water may be adjusted via the admixing device,

   wherein the method comprises the following steps:

   - determining the conductivity of the raw water by means of a conductivity sensor (12), and determining therefrom the total hardness of the raw water using a calibration characteristic which is stored in an electric control unit (11),
   - determining the first partial volume flow $V(t)_{partial1soft}$ directly or indirectly using the at least one flow meter (13, 14, 17),

**characterized in**

**that** a total hardness I of the raw water, which is used for automatically controlling the regeneration process of the ion exchange resin (5), is derived from the measured conductivity by means of a first calibration characteristic (F1), and a total hardness II of the raw water, which is used for automatically controlling the admixing device, is derived from the measured conductivity by means of a second calibration characteristic (F2), wherein the second calibration characteristic (F2) differs from the first calibration characteristic (F1) and the total hardness I derived from the first calibration characteristic (F1) is at least section-wise larger than the total hardness II derived from the second calibration characteristic (F2).

2. The method according to claim 1, **characterized in that** the first calibration characteristic (F1) uses a conversion factor of 28-35 $\mu$S/cm per °dH, in particular of 30-33 $\mu$S/cm per °dH.

3. The method according to any one of the preceding claims, **characterized in that** the second calibration characteristic (F2) uses a conversion factor of 35-44 $\mu$S/cm per °dH, in particular of 38-41 $\mu$S/cm per °dH.

4. The method according to any one of the preceding claims, **characterized in that** the electronic control unit (11) initiates triggering of the regeneration process on the basis of the total raw water hardness I derived from the first calibration characteristic (F1), the amount of raw water having flown through the ion exchange resin (5) and a capacity of the ion exchange resin (5) stored in the control unit (11).

5. The method according to any one of claims 1 to 4, **characterized in that** controlling the admixing device is done only on the basis of the total hardness II of the raw water derived from the second calibration characteristic (F2) and the pre-defined admixing water hardness.

6. The method according to any one of claims 1 to 4, **characterized in that** the water softening system (1) has at least two flow meters (13, 14, 17),
   that the first partial volume flow $V(t)_{partial1soft}$ and the second partial volume flow $V(t)_{partial2raw}$ are determined directly or indirectly using the at least two flow meters (13, 14, 17),
   and that the admixing device is controlled on the basis of the total raw water hardness II derived from the second calibration characteristic (F2) and a pre-defined admixing water hardness in a feedback process with the specific partial volume flows $V(t)_{partial1soft}$ and $V(t)_{partial2raw}$.

7. The method according to any one of the preceding claims, **characterized in that** the conductivity of the regenerant solution (7) is determined by means of a further conductivity sensor.

8. A water softening system (1) having: an ion exchange device (6) comprising an ion exchange resin (5), a supply vessel (8) for supplying a regenerant solution (7) for regenerating the ion exchange resin (5), and an admixing device for mixing of raw water and softened water, a conductivity sensor (12) for measuring the conductivity of the raw water, at least one, preferably two, flow meters (13, 14, 17) and an electronic control unit (11) for automatically controlling a regeneration process and for automatically controlling the admixing device,
   **characterized in**
   **that** the electronic control unit (11) has a memory having a multitude of calibration characteristics (F1, F2) stored therein, wherein a first total hardness I of the raw water which is used for automatically controlling the regeneration process of the ion exchange resin (5) can be determined from the conductivity of the raw water by means of a first calibration characteristic (F1), and a second total hardness II of the raw water which is used for automatically controlling the admixing device can be determined from the conductivity of the raw water by means of a second calibration characteristic (F2), wherein the first calibration characteristic (F1) differs from the second calibration characteristic (F2) and the total hardness I derived from the first calibration characteristic (F1) is at least section-wise larger than the total hardness II derived from the second calibration characteristic (F2).

9. The water softening system (1) in accordance with claim 8, **characterized in that** the conductivity sensor (12), at least one flow meter (13, 14, 17) and/or the admixing device are arranged in a fitting adapter (4) for mounting the water softening system (1) to a water net piping.

10. The water softening system (1) in accordance with claim 8 or 9, **characterized in that** the conductivity sensor (12), at least one flow meter (13, 14, 17) and/or the admixing device are arranged in a control head of the water softening system (1).

11. The water softening system (1) in accordance with one of the claims 8 through 10, **characterized in that** a bypass pipe (18) is provided in which are arranged the admixing device and a flow meter (17) for the second partial volume flow V(t)$_{partial2raw}$ of the raw water used for admixing.

12. The water softening system (1) in accordance with one of the claims 8 through 11, **characterized in that** the admixing device comprises an admixing valve (9), in particular a bypass valve, and an actuating motor (10) which is driven by the electronic control unit (11).

13. The water softening system (1) in accordance with one of the claims 8 through 12, **characterized in that** a further conductivity sensor is arranged so as to contact the regenerant solution (7).

**Revendications**

1. Procédé pour faire fonctionner une installation d'adoucissement d'eau (1) avec un dispositif échangeur d'ions (6) comprenant une résine échangeuse d'ions (5), un récipient de stockage (8) pour la mise à disposition d'une solution d'agent régénérant (7) pour régénérer la résine échangeuse d'ions (5), un dispositif de mitigeage ainsi qu'au moins un débitmètre (13, 14, 17),
un courant volumique V(t)$_{roh}$ d'eau brute arrivant à l'installation d'adoucissement d'eau (1) étant divisé avant ou dans l'installation d'adoucissement d'eau (1) en un premier courant partiel et un deuxième courant partiel, le premier courant partiel étant guidé à travers la résine échangeuse d'ions (5) et ce courant partiel adouci V(t)$_{teil1weich}$ étant mélangé au deuxième courant partiel composé d'eau brute V(t)$_{teil2roh}$,
de sorte qu'un courant volumique sortant V(t)$_{verschnitt}$ d'eau mitigée est formé dans ou après l'installation d'adoucissement d'eau (1),
le rapport entre le premier et le deuxième courant volumique dans le courant volumique sortant V(t)$_{verschnitt}$ d'eau mitigée étant réglable au moyen du dispositif de mitigeage,
le procédé présentant les étapes suivantes :

- détermination de la conductivité de l'eau brute au moyen d'un capteur de conductivité (12) et détermination à partir de celle-ci de la dureté totale de l'eau brute avec une courbe d'étalonnage enregistrée dans une unité de commande électronique (11),
- détermination directe ou indirecte du premier courant partiel V(t)$_{teil1weich}$ avec ledit au moins un débitmètre (13, 14, 17),

**caractérisé en ce**
**qu'**une dureté totale I de l'eau brute, qui est utilisée pour la commande automatique du processus de régénération de la résine échangeuse d'ions (5), est obtenue au moyen d'une première courbe d'étalonnage (F1) à partir de la conductivité mesurée,
et une dureté totale II de l'eau brute, qui est utilisée pour la commande automatique du dispositif de mitigeage, est obtenue au moyen d'une deuxième courbe d'étalonnage (F2) à partir de la conductivité mesurée, la deuxième courbe d'étalonnage (F2) étant différente de la première courbe d'étalonnage (F1) et la dureté totale I obtenue à partir de la première courbe d'étalonnage (F1) est supérieure au moins dans certaines zones à la dureté totale II obtenue à partir de la deuxième courbe d'étalonnage (F2).

2. Procédé selon la revendication 1, **caractérisé en ce que** la première courbe d'étalonnage (F1) utilise un facteur de conversion de 28 à 35 µS/cm par °dH, en particulier de 30 à 33 µS/cm par °dH.

3. Procédé selon l'une des revendications précédentes, **caractérisé en ce que** la deuxième courbe d'étalonnage (F2) utilise un facteur de conversion de 35 à 44 µS/cm par °dH, en particulier de 38 à 41 µS/cm par °dH.

4. Procédé selon l'une des revendications précédentes, **caractérisé en ce que** l'unité de commande électronique (11) commande le déclenchement du processus de régénération à l'aide de la dureté totale I de l'eau brute obtenue à partir de la première courbe d'étalonnage (F1), de la quantité d'eau brute qui a traversé la résine échangeuse d'ions (5) et d'une capacité de la résine échangeuse d'ions (5) enregistrée dans l'unité de commande (11).

5. Procédé selon l'une des revendications 1 à 4, **caractérisé en ce que** la commande du dispositif de mitigeage s'effectue seulement à l'aide de la dureté totale II de l'eau brute obtenue à partir de la deuxième courbe d'étalonnage (F2) et de la dureté prédéfinie de l'eau mitigée.

**6.** Procédé selon l'une des revendications 1 à 4, **caractérisé en ce que** l'installation d'adoucissement d'eau (1) présente au moins deux débitmètres (13, 14, 17),
qu'une détermination directe ou indirecte du premier courant partiel $V(t)_{teil1weich}$ et du deuxième courant partiel $V(t)_{teil2roh}$ est effectuée avec lesdits au moins deux débitmètres (13, 14, 17),
et que la commande du dispositif de mitigeage s'effectue à l'aide de la dureté totale II de l'eau brute obtenue à partir de la deuxième courbe d'étalonnage (F2) et d'une dureté prédéfinie de l'eau mitigée en rétroaction avec les courants partiels $V(t)_{teil1weich}$ et $V(t)_{teil2roh}$ déterminés.

**7.** Procédé selon l'une des revendications précédentes, **caractérisé en ce que** la conductivité de la solution d'agent régénérant (7) est déterminée au moyen d'un autre capteur de conductivité.

**8.** Installation d'adoucissement d'eau (1) avec un dispositif échangeur d'ions (6) comprenant une résine échangeuse d'ions (5), un récipient de stockage (8) pour la mise à disposition d'une solution d'agent régénérant (7) pour régénérer la résine échangeuse d'ions (5) ainsi qu'un dispositif de mitigeage pour mélanger de l'eau brute et de l'eau adoucie, un capteur de conductivité (12) pour mesurer la conductivité de l'eau brute, au moins un, de préférence deux débitmètres (13, 14, 17) ainsi qu'une unité de commande électronique (11) pour la commande automatique d'un processus de régénération et pour la commande automatique du dispositif de mitigeage,
**caractérisée en ce**
**que** l'unité de commande électronique (11) comprend une mémoire avec plusieurs courbes d'étalonnage (F1, F2) enregistrées, une première dureté totale I de l'eau brute, qui est utilisée pour la commande automatique du processus de régénération de la résine échangeuse d'ions (5), et une deuxième dureté totale II de l'eau brute, qui est utilisée pour la commande automatique du dispositif de mitigeage, pouvant être déterminées à partir de la conductivité de l'eau brute au moyen respectivement d'une première courbe d'étalonnage (F1) et d'une deuxième courbe d'étalonnage (F2), la première courbe d'étalonnage (F1) étant différente de la deuxième courbe d'étalonnage (F2) et la dureté totale I obtenue à partir de la première courbe d'étalonnage (F1) étant supérieure au moins dans certaines zones à la dureté totale II obtenue à partir de la deuxième courbe d'étalonnage (F2).

**9.** Installation d'adoucissement d'eau (1) selon la revendication 8, **caractérisée en ce que** le capteur de conductivité (12), au moins un débitmètre (13, 14, 17) et/ou le dispositif de mitigeage sont disposés dans une pièce intermédiaire de raccordement (4) pour le montage de l'installation d'adoucissement d'eau (1) sur une tuyauterie d'un réseau d'eau.

**10.** Installation d'adoucissement d'eau (1) selon la revendication 8 ou 9, **caractérisée en ce que** le capteur de conductivité (12), au moins un débitmètre (13, 14, 17) et/ou le dispositif de mitigeage sont disposés dans une tête de commande de l'installation d'adoucissement d'eau (1).

**11.** Installation d'adoucissement d'eau (1) selon l'une des revendications 8 à 10, **caractérisée en ce qu'**une conduite de dérivation (18) est prévue, dans laquelle le dispositif de mitigeage et un débitmètre (17) pour le deuxième courant partiel $V(t)_{teil2roh}$ de l'eau brute utilisée pour le mitigeage sont disposés.

**12.** Installation d'adoucissement d'eau (1) selon l'une des revendications 8 à 11, **caractérisée en ce que** le dispositif de mitigeage comprend une vanne de mitigeage (9), en particulier une vanne de dérivation, et un moteur de commande (10) qui est commandé par l'unité de commande électronique (11).

**13.** Installation d'adoucissement d'eau (1) selon l'une des revendications 8 à 12, **caractérisée en ce qu'**un capteur de conductivité additionnel est arrangé de telle manière qu'il vienne en contact avec la solution d'agent régénérant (7).

Fig. 1

EP 2 231 526 B1

Fig. 2

EP 2 231 526 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19940162 A1
- DE 19841568 A1
- US 6814872 B2
- EP 0900765 B1
- DE 19749636 A1